# EUROPÄISCHE PATENTSCHRIFT

(11) **EP 3 335 206 B1**
(45) Veröffentlichungstag und Bekanntmachung des Hinweises auf die Patenterteilung: **11.09.2019**
(21) Anmeldenummer: 16751213.6
(22) Anmeldetag: 26.07.2016
(51) Int. Cl.: G08B 25/01

(54) **BEREITSTELLEN VON HILFSMITTELN NACH EINEM FAHRZEUGUNFALL**
PROVIDING AN AID MEANS AFTER A VEHICLE ACCIDENT
FOURNITURE DE MOYENS D'AIDE APRÈS UN ACCIDENT DE LA ROUTE

(30) Priorität: 11.08.2015 DE 102015215294
(43) Veröffentlichungstag der Anmeldung: 20.06.2018
(73) Patentinhaber: Bayerische Motoren Werke Aktiengesellschaft, 80809 München (DE)
(72) Erfinder: GRUFFKE, Michael, 85435 Erding (DE); KAINDL, Markus, 85579 Neubiberg (DE); PILKINGTON, Ingrid, 80995 München (DE)
(86) Internationale Anmeldenummer: PCT/EP2016/067720
(87) Internationale Veröffentlichungsnummer: WO 2017/025312

(56) Entgegenhaltungen:
- WO-A1-2004/057901
- DE-A1-102012 216 208
- US-A1- 2008 132 199
- US-A1- 2010 048 159
- US-A1- 2014 300 739

## Beschreibung

Die Erfindung betrifft ein Verfahren zum Bereitstellen von Hilfsmitteln nach einem Fahrzeugunfall. Die Erfindung betrifft weiterhin eine entsprechende Notrufeinrichtung für ein Fahrzeug, ein damit ausgestattetes Fahrzeug sowie ein entsprechendes System zum Bereitstellen der Hilfsmittel. Die Erfindung betrifft auch ein entsprechendes Computerprogrammprodukt.

Nach einem Fahrzeugunfall ist es wichtig, innerhalb möglichst kurzer Zeit die richtigen Hilfsmittel bereitzustellen, um den am Unfall beteiligten Personen zu helfen, das verunfallte Fahrzeug in geeigneter Weise zu handhaben, Unfalldaten aufzunehmen, ggf. den Verkehr am Unfallort zu regeln usw. Um dies zu ermöglichen sind Rettungsleitstellen geschaffen worden, die zum Beispiel in Europa unter der einheitlichen Euronotrufnummer 112 sämtliche Hilfsleistungen beispielsweise von Rettungsdiensten, Polizei, Feuerwehr usw. professionell koordinieren.

Im Gebiet der Europäischen Union wird zudem für Kraftfahrzeuge ein standardisiertes elektronisches Notrufsystem unter dem Namen eCall eingeführt werden. Gemäß diesem System werden vorbestimmte, unfallrelevante Daten des verunfallten Fahrzeugs, die von einer Notrufeinrichtung des Fahrzeugs erfasst werden, mittels einer Mobiltelefonverbindung über die Euronotrufnummer an die jeweilige Rettungsleitstelle gesandt, sobald eine Unfallsituation detektiert wird. Die unfallrelevanten Daten umfassen Daten, die in einem so genannten Minimum Data Set (MSD) zwingend übertragen werden müssen, beispielsweise Daten zur Identifikation des Fahrzeugs und Positionsdaten, die im Fahrzeug satellitengestützt gewonnen werden unter Nutzung eines geeigneten Satellitensystems wie z.B. des Global Positioning Systems (GPS), Galileo oder Egnos. Die unfallrelevanten Daten umfassen weiterhin Daten, die für eine vorgegebene Fahrzeugklasse repräsentativ sind, der das verunfallte Fahrzeug zuzuordnen ist. Die unfallrelevanten Daten umfassen weiterhin Daten zur Treibstoffart des Fahrzeugs, zum Unfallzeitpunkt und zur Fahrtrichtung des Fahrzeugs.

Optional können im Rahmen eines eCalls weitere Daten übertragen werden, beispielsweise Daten von Bord-Sicherheitssystemen, die repräsentativ sind für die Schwere des Unfallereignisses, für die Zahl der Insassen und/oder dafür, ob die Sicherheitsgurte angelegt waren, ob das Fahrzeug sich überschlagen hat usw. Solche optionale Daten können hinsichtlich ihrer Art, ihrem Inhalt und ihrem Format insbesondere individuell von einem Fahrzeughersteller definiert werden.

Um einen eCall auszulösen wird die Unfallsituation insbesondere automatisch mittels eines Sensors detektiert, der funktionell an das Auslösen eines Airbags in dem Fahrzeug gekoppelt ist. Die Mobiltelefonverbindung wird dann automatisch hergestellt. Die Mobiltelefonverbindung kann auch unabhängig von dem Sensor manuell durch Drücken einer im Fahrzeug vorgesehenen Notruftaste hergestellt werden und daraufhin können die Daten ebenfalls automatisch vom Fahrzeug zur Rettungsleitstelle übertragen werden. Die Mobilfunkverbindung wird auf Basis des Global System for Mobile Communications (GSM) Systems aufgebaut. Sie umfasst sowohl die Möglichkeit, Daten zu übertragen als auch eine Sprachverbindung herzustellen. Die Datenübertragung erfolgt insbesondere per inband.

Für Russland ist ein dem eCall-System entsprechendes System vorgesehen, das automatische Notrufe aus einem verunfallten Fahrzeug mit Positionsdaten des Fahrzeugs an eine Rettungsleitstelle sendet, die unter Nutzung des Global Navigation Satellite System (GLONASS) gewonnen werden. Dieses russische Notruf-System ist unter dem Namen ERA GLONASS bekannt. Bei diesem System werden ebenfalls unfallrelevante Daten von einem verunfallten Fahrzeug automatisch an eine Rettungsleitstelle gesandt.

Die Anmelderin bietet im Rahmen des von ihr für entsprechend ausgestattete BMW-Fahrzeuge angebotenen Services Connected Drive ein Notrufsystem an, bei dem manuell oder automatisch nach einem Unfall eine Sprach- und Datenverbindung zwischen dem Fahrzeug und einer von BMW bereit gestellten Leitstelle (Call Center) aufgebaut wird. Dabei werden neben positions- und fahrzeugbezogenen Daten wie z.B. die Fahrzeugidentifikationsnummer auch von Fahrzeugsensoren ermittelte Daten, beispielsweise Daten von Beschleunigungssensoren mittels einer Mobilfunkschnittstelle vom Fahrzeug an die Leitstelle übertragen. Die Daten umfassen auch unfallrelevante Daten.

Aus der DE 102 38 805 A1 ist eine Vorrichtung zur automatischen Erzeugung eines Notrufs bekannt, bei der die Position der Vorrichtung erfasst wird. Wenn ein Notfallsensor einen Notfall erfasst, dann sendet ein Mobilfunkendgerät eine Meldung aus, die die erfasste Position der Vorrichtung enthält. Die Vorrichtung kann in einem Kraftfahrzeug eingebaut sein.

Aus der EP 1 494 492 A1 sind ein Verfahren und eine Vorrichtung zum Ausführen von Notrufen bekannt, bei der über eine zwischen dem Fahrzeug und einer Notrufzentrale aufgebauten Sprachverbindung Daten, die Notrufinformationen enthalten, mittels Dual Tone Multi Frequency (DTMF) Nachrichten übertragen werden.

Aus der DE 10 2012 216 208 A1 ist ein Verfahren zum Aussenden eines Notrufdatensatzes von einem Kraftfahrzeug an einen Notrufzentralrechner bekannt, bei dem ein Fahrzeugnotrufdatensatz und ein Personennotrufdatensatz übertragen werden. Der Fahrzeugnotrufdatensatz enthält Informationen, die dem Fahrzeug zugeordnet sind, wie z.B. die Fahrzeugidentifikationskennung oder der Ort, an dem sich das Fahrzeug zum Zeitpunkt des Absetzens des Notrufs befindet. Der Personennotrufdatensatz enthält Informationen, die den Insassen des Fahrzeugs zugeordnet sind wie z.B. deren Name, Vorname und Geburtsdatum. Bevor der Notrufdatensatz mit dem Personennotrufdatensatz vom Fahrzeug an den Notrufzentralrechner übertragen wird, werden vom Fahrzeug aus Personengesundheitsdaten zu den Insassen von einem Gesundheitsdatenzentralrechner abgerufen. Der Personennotrufdatensatz enthält dann die zum Identifizieren der Personen geeigneten Personenindividualdaten und die ihnen zugeordneten Personengesundheitsdaten.

Aus der WO 2004/057901 A1 ist ein Verfahren zum Ausführen eines Notrufs und zum Bereitstellen geeigneter Hilfskräfte bekannt. Dabei wird ein in einer Rettungsleitstelle eingehender Notruf aufgezeichnet und in geeigneter Weise wie z.B. durch Identifizierung einer GSM-Mobilfunkzelle, aus der der Notruf abgesetzt wurde, der Ort des Notfalls ermittelt. Zudem wird im Zuge des Notrufs, beispielsweise durch Befragen des Anrufers erfasst, um welche Art des Notfalls es sich handelt. Anhand einer in einer Datenbank gespeicherten Liste von Rettungskräften, denen jeweils eine örtliche und eine fachliche Zuständigkeit zugeordnet ist, können dann diejenigen Rettungskräfte zum Ort des Notfalls gesandt werden, die diesem am nächsten liegen und für die Behandlung der Art des Notfalls geeignet sind.

Aus der US 2014/0300739 A1 ist ein Notrufsystem für Fahrzeuge bekannt, mit dem einerseits automatisch von einem verunfallten Fahrzeug sowohl eine Sprachverbindung als auch eine Datenverbindung zu einer Rettungsleitstelle hergestellt wird. Weiterhin ist vorgesehen, mindestens eine durch eine Kamera des Fahrzeugs aufgenommene Videodatei zum Unfallhergang auf einen von der Rettungsleitstelle unabhängigen Datenspeicher hochzuladen. Um der Rettungsleitstelle zu ermöglichen, auf diese Videodatei zuzugreifen, wird über die Datenverbindung ein dazu gehöriger Uniform Resource Locator (URL) Link an die Rettungsleitstelle gesandt.

Es ist Aufgabe der Erfindung, nach einem Fahrzeugunfall einer mittels eines automatischen Notrufs benachrichtigten Rettungsleitstelle möglichst viele unfallrelevante Daten zur Verfügung zu stellen.

Diese Aufgabe wird durch die in den unabhängigen Patentansprüchen angegebene Erfindung gelöst. Vorteilhafte Ausführungsformen der Erfindung sind in den abhängigen Ansprüchen angegeben.

Erfindungsgemäß ist zum Bereitstellen von Hilfsmitteln nach einem Fahrzeugunfall vorgesehen, dass mittels einer Notrufeinrichtung des Fahrzeugs nach dem Unfall automatisch eine Daten-und/oder Sprechfunkverbindung zwischen dem Fahrzeug und einer Rettungsleitstelle hergestellt wird. Mittels mindestens eines ersten Sensors im Fahrzeug ermittelte erste Sensor-Daten werden dabei an die Rettungsleitstelle übertragen. Weiterhin werden von dem ersten Sensor erfasste und/oder von mindestens einem zweiten, im Fahrzeug vorgesehenen Sensor erfasste zweite Sensor-Daten automatisch an einen von der Rettungsleitstelle unabhängigen Datenspeicher übertragen und dort gespeichert. Über die Daten-und/oder Sprechfunkverbindung wird eine dem Datenspeicher zugeordnete Kontaktinformation vom Fahrzeug zu der Rettungsleitstelle übertragen. Die Rettungsleitstelle ruft unter Verwendung der Kontaktinformation die in dem unabhängigen Datenspeicher gespeicherten zweiten Sensor-Daten und/oder davon abgeleitete Daten ab. Die abgerufenen Daten sind dazu geeignet, der Unfallart angepasste Hilfsmittel auszuwählen. Zur Ausführung der entsprechenden Verfahrensschritte ist zumindest seitens der Rettungsleitstelle insbesondere ein Computer vorgesehen.

Mit der Erfindung wurde erkannt, dass im Rahmen der vorgesehenen standardisierten Notrufsysteme nur eine relativ geringe Menge unfallrelevanter Daten vom Fahrzeug zur Rettungsleitstelle übertragen werden und dass es deshalb für die jeweiligen Rettungsleitstellen kaum möglich sein wird, herstellerspezifische, optional vorgesehene Daten für die Vielzahl von Fahrzeug-Fabrikaten und -Modellen zuverlässig zu verarbeiten. Dadurch gehen unter Umständen in der Rettungskette wichtige Daten verloren, die helfen können, den verunfallten Personen und/oder Fahrzeugen schneller und/oder besser zu helfen.

Weiterhin wurde mit der Erfindung erkannt, dass eine derartige Informationslücke seitens der Rettungsleitstelle geschlossen werden kann, wenn ihr ein relativ einfaches Werkzeug zur Verfügung steht, mit dem sie zusätzliche, herstellerspezifische unfallrelevante Daten zu einem Fahrzeugunfall abrufen kann. Mit der Erfindung wird insbesondere ermöglicht, dass sie diese Daten über eine in einem handelsüblichen Computer standardisierte Datenschnittstelle von dem herstellerseitigen Datenspeicher abrufen kann. Dadurch ergeben sich an dieser Schnittstelle praktisch keine Anpassungsprobleme. Die Schnittstelle kann insbesondere eine übliche Computernetzwerkschnittstelle sein, die z.B. mit einem Internetbrowser zugänglich ist.

Die entsprechende Kommunikationsinformation kann dann insbesondere eine http-Adresse, eine https-Adresse, eine IP-Adresse oder eine Uniform Resource Locator (URL) umfassen, die eine jeweilige Ressource identifiziert, über die der Datenspeicher kontaktierbar ist.

Mit der Erfindung kann insbesondere eine Erweiterung eines standardisierten Notrufs wie eCall oder ERA GLONASS dahin gehend erfolgen, dass einer Rettungsleitstelle zusätzliche Daten zur Verfügung gestellt werden. Dazu kann mit der Erfindung vorteilhaft ein zu dem standardisierten Notruf-Datenübertragungskanal ergänzender, zweiter Datenübertragungskanal zur Verfügung gestellt werden.

Die mittels des mindestens einen ersten Sensors ermittelten ersten Sensor-Daten können insbesondere Daten zum Aufenthaltsort des Fahrzeugs wie zum Beispiel mittels eines GPS-Sensors basierte Koordinaten umfassen. Die an die Rettungsleitstelle übertragenen Daten können aber auch weitere Daten wie Fahrzeug-Identifikationsdaten, Unfallzeitpunkt usw. umfassen.

Die ersten und/oder zweiten Sensor-Daten werden insbesondere vor, während oder nach dem Unfallzeitpunkt und insbesondere im Zuge des Unfallhergangs erzeugt. Die jeweiligen Sensoren sind insbesondere fest im Fahrzeug verbaut.

Die Unfallart kann anhand eines oder mehrerer Parameter charakterisiert sein, beispielsweise durch einen Parameter, der die Schwere des Unfalls angibt, beispielsweise in drei Stufen leicht/mittel/schwer und/oder durch einen Parameter, der charakteristisch dafür ist, ob mehrere Fahrzeuge und/oder mehrere Personen an dem Unfall beteiligt sind.

Der Datenspeicher ist erfindungsgemäß in einem Datenverarbeitungszentrum mit einem so genannten Backend Server vorgesehen, das von dem Fahrzeughersteller des verunfallten Fahrzeugs direkt oder indirekt mittels eines Dienstleisters auf einem jeweiligen Betriebsort betrieben wird, der an einem anderen Ort liegt als die Rettungsleitstelle. Der Backend Server ist dabei so ausgestaltet, dass er mit einer Vielzahl von Fahrzeugen des Fahrzeugherstellers regelmäßig Daten austauscht und insbesondere von den Fahrzeugen Daten abruft bzw. empfängt.

Gemäß einem vorteilhaften Ausführungsbeispiel der Erfindung werden zumindest die zweiten Sensor-Daten in einer Datenverarbeitungseinheit so verarbeitet, dass der Unfall mindestens einer von mehreren vorgegebenen Unfallarten zugeordnet wird, beispielsweise einem Auffahrunfall, einem Frontal-Zusammenstoß, einem Unfall innerorts, auf Landstraße oder auf Autobahn, einem Unfall mit Fahrzeugüberschlag, einem Unfall mit Personenschaden, einem Unfall mit Fußgängerbeteiligung, einem Unfall, bei dem das Fahrzeug noch fahrbereit oder nicht mehr fahrbereit ist usw. Die zweiten Sensor-Daten, die davon abgeleiteten Daten oder weitere vom Fahrzeug übertragene Daten können angeben, wie viele Insassen im Fahrzeug zum Unfallzeitpunkt waren, ob sie ansprechbar oder bewußtlos sind usw.

Der mindestens eine zweite Sensor ist insbesondere ein Unfallsensor (Crash-Sensor). Er kann insbesondere Geschwindigkeitswerte, Beschleunigungswerte und/oder Deformationswerte, z.B. an Karosserieteilen, erfassen. Mit dem jeweiligen Sensor kann beispielsweise erfasst werden, wie viele Personen und/oder Fahrzeuge am Unfall beteiligt sind. Es können mehrere Sensoren vorgesehen sein, beispielsweise ein optischer, ein mechanischer und/oder ein akustischer Sensor. Insbesondere kann eine Kamera als Sensor vorgesehen sein.

Die zweiten Sensor-Daten können in einer Datenverarbeitungseinheit so verarbeitet werden, dass die Schwere des Unfalls einem von mehreren Schweregraden zugeordnet wird. Zur Zuordnung einer Unfallart können auch weitere Daten bereitgestellt, von einer Datenquelle abgerufen und/oder verarbeitet werden, beispielsweise von einem Navigationssystem oder einer Datenbank. Die entsprechende Datenverarbeitung erfolgt vorzugsweise ganz oder teilweise im Backend Server, sie kann aber auch ganz oder teilweise im Fahrzeug und/oder in einem Computer der Rettungsleitstelle oder in einem anderen Computer erfolgen.

Die sich jeweils im Zuge der Datenverarbeitung ergebenden Werte bzw. Informationen können zur Ausgabe bereit gestellt werden, beispielsweise in dem Datenspeicher. Sie können insbesondere durch die Rettungsleitstelle von dem Datenspeicher abgerufen werden. Sie können auf einer beispielsweise optischen und/oder akustischen Ausgabeeinrichtung ausgegeben werden, beispielsweise auf einem Bildschirm, auf einer Datenbrille und/oder auf einem Lautsprecher.

Die Datenquelle muss nicht im Fahrzeug verbaut sein, sondern kann auch in der Rettungsleitstelle vorgesehen sein, in dem Datenspeicher vorgesehen sein oder über das Internet mit der Rettungsleitstelle verbunden werden.

Als an die Unfallart angepasste Hilfsmittel können beispielsweise Einsatzkräfte wie Polizei, Feuerwehr oder Rettungsdienst und/oder deren Ausrüstung angesehen werden. Das Hilfsmittel kann auch ein Abschleppdienst oder dessen Ausrüstung sein. Insbesondere können als an eine Unfallart angepasste Hilfsmittel angesehen werden ein Rettungswagen, ein Hubschrauber, ein Abschleppwagen, ein Kran, Mittel der Feuerwehr oder des technischen Hilfswerks wie ein Gerätewagen, ein Verkehrsleitsystem oder eine Rettungsschere.

Die Daten- und/oder Sprachfunkverbindung kann eine Mobiltelefonverbindung sein, die beispielsweise nach mindestens einem GSM-Standard ausgebildet ist, insbesondere nach dem Standard GSM2 (2G), GSM3 (3G), GSM4 (G4, LTE) und/oder GSM 5 (G5). Die Daten- und/oder Sprachfunkverbindung kann beispielsweise eine Mobiltelefonverbindung sein, die im Rahmen bzw. entsprechend eines eingangs beschriebenen eCalls hergestellt wird. Sie kann auch im Rahmen eines ERA GLONASS Notrufs hergestellt sein.

Die Daten- und/oder Sprachfunkverbindung kann insbesondere Verbindungen gemäß mindestens einem der Standards bzw. Protokolle General Packet Radio Service (GPRS), Enhanced Data Rates for GSM Evolution (EDGE), Universal Mobile Telecommunications System (UMTS), Code Division Multiple Access (CDMA), Wideband CDMA (WCDMA), LTE, LTE-Advanced, 5G oder deren Nachfolgetechnologien oder eine Car to Infrastruktur (C2I) Technologie umfassen. Sie kann auch Short Message Service (SMS) Nachrichten umfassen.

Die Daten- und/oder Sprachfunkverbindung kann insbesondere Verbindungen gemäß mindestens einem der Standards bzw. Protokolle Wireless Local Area Network (WLAN bzw. pWLAN (802.11p)), Transmission Control Protocol/Internet Protocol (TCP/IP), User Datagram Protocol (UDP), Hypertext Transfer Protocol (http), Hypertext Transfer Protocol Secure (https) umfassen.

Der unabhängige Datenspeicher kann insbesondere in einem adressenbasierten Computernetzwerk vorgesehen sein. Die von dem Fahrzeug zur Rettungsleitstelle übertragene Kontaktinformation kann insbesondere eine Telefonnummer eines in dem Fahrzeug befindlichen Mobiltelefons umfassen. Sie kann insbesondere eine Verbindungsnummer einer SIM-Karte umfassen, die in einer fest im Fahrzeug verbauten Mobilfunkeinrichtung integriert ist. Die Kontaktinformation kann eine dem Datenspeicher zugeordnete Netzwerk-Adresse des Computernetzwerks umfassen, beispielsweise eine Internet (URL),- eine IP,- eine http,- und/oder eine https-Adresse. Über die entsprechende Netzwerkverbindung kann insbesondere eine abgesicherte, verschlüsselte Datenübertragung erfolgen. Die Kontaktinformation kann insbesondere eine Adresse wie eine URL bzw. einen Hyperlink zu dem Datenspeicher bzw. zu einem Computer, insbesondere zu einem Backend-Server, umfassen.

Die von der Rettungsleitstelle aus dem unabhängigen Datenspeicher abgerufenen Daten und/oder davon abgeleitete Daten können von der Rettungsleitstelle an eine Einsatzkräfte-Einrichtung übertragen werden, beispielsweise an einen Computer einer Polizeidienststelle oder einer Feuerwache, an eine Steuereinrichtung eines Einsatzfahrzeugs oder an ein sonstiges mobiles Gerät wie z.B. ein Multifunktions-Mobilfunkgerät (Smart Phone), Laptop, Tablet PC usw.

In einem weiteren, vorteilhaften Ausführungsbeispiel der Erfindung umfassen die zweiten Sensor-Daten Fahrzeug-Kontaktinformationen, beispielsweise eine Telefonnummer und/oder mindestens eine Netzwerk-Adresse wie URL, IP, http, https usw. Von der Rettungsleitstelle kann insbesondere mittels der jeweiligen Fahrzeug-Kontaktinformationen eine weitere Daten,- und/oder Sprechfunkverbindung zu dem verunfallten Fahrzeug und/oder zu einem dem Fahrzeug zugeordneten Computer, beispielsweise dem Backend-Server, hergestellt werden.

Im Rahmen der Erfindung kann insbesondere vorgesehen sein, dass die erste Verbindung vom Fahrzeug initiiert wird und nur eine unidirektionale Datenverbindung zur Rettungsleitstelle herstellt. Sie kann eine reine Sprachverbindung, eine reine Datenverbindung oder eine Sprach- und Datenverbindung sein. Zur Nutzung der ersten Verbindung kann vorgesehen sein, dass lediglich eine relativ kurze Nachricht, insbes. eine SMS-Nachricht, vom Fahrzeug zur Rettungsleitstelle gesandt wird. Die zweite Verbindung kann insbesondere eine bidirektionale Verbindung sein. Sie kann eine reine Sprachverbindung oder eine Sprach- und Datenverbindung sein. Sie kann insbesondere von der Rettungsleitstelle initiiert werden.

In einem weiteren vorteilhaften Ausführungsbeispiel der Erfindung sind die zweiten, in dem unabhängigen Datenspeicher gespeicherten Sensor-Daten derart gesichert, dass Sie von der Rettungsleitstelle nicht verändert, sondern nur abgerufen werden können.

Im Rahmen der Erfindung kann auch eine Notrufeinrichtung für ein Fahrzeug angegeben werden, die eingerichtet ist um nach einem Unfall des Fahrzeugs automatisch eine Daten- und/oder Sprechfunkverbindung zwischen dem Fahrzeug und einer Rettungsleitstelle herzustellen, wobei mittels mindestens eines ersten Sensors im Fahrzeug ermittelte erste Sensor-Daten an die Rettungsleitstelle übertragen werden. Die Einrichtung ist derart ausgestaltet, dass sie
- von dem ersten Sensor erfasste und/oder von mindestens einem zweiten, im Fahrzeug vorgesehenen Sensor erfasste zweite Sensor-Daten automatisch an einen von der Rettungsleitstelle unabhängigen Datenspeicher sendet, und
- über die Daten- und/oder Sprechfunkverbindung eine dem Datenspeicher zugeordnete Kontaktinformation vom Fahrzeug zu der Rettungsleitstelle gesandt wird, so dass die Rettungsleitstelle die in dem unabhängigen Datenspeicher gespeicherten zweiten Sensor-Daten und/oder davon abgeleitete Daten unter Verwendung der Kontaktinformation abrufen kann, wobei die abgerufenen Daten geeignet sind zur Auswahl von der Unfallart angepassten Hilfsmitteln.

In der Notrufeinrichtung kann insbesondere eine erste Steuerungseinrichtung vorgesehen sein, die zur Ausgabe der ersten Sensor-Daten und der Kontaktinformation an die Rettungsleitstelle eingerichtet ist und eine zweite, von der ersten Steuerungseinrichtung funktionell unabhängige Steuerungseinrichtung, die eingerichtet ist um zumindest die zweiten Sensor-Daten an den Datenspeicher zu senden. Dabei können auch die ersten Sensor-Daten und ggf. weitere Daten an den Datenspeicher gesandt werden.

Die erste Steuerungseinrichtung kann insbesondere Steuerungs-Komponenten aufweisen, die gemäß einem standardisierten Notrufsystem ausgebildet sind, beispielsweise nach dem europäischen eCall-Standard oder nach dem ERA GLONASS-Standard. Die zweite, von der ersten Steuerungseinrichtung funktionell unabhängige Steuerungseinrichtung kann insbesondere individuelle, fahrzeugspezifische und/oder für den Fahrzeughersteller spezifische Steuerungskomponenten aufweisen.

Die Notrufeinrichtung ist insbesondere eingerichtet, in diesem Dokument beschriebene Verfahrensschritte ganz oder teilweise auszuführen.

Im Rahmen der Erfindung kann auch ein Fahrzeug angegeben werden, das eine in diesem Dokument beschriebene Notrufeinrichtung umfasst, sowie ein Notrufsystem, das eine Rettungsleitstelle und eine in diesem Dokument beschriebene Notrufeinrichtung umfasst.

Die Erfindung kann auch in einem Computerprogrammprodukt realisiert werden, das beim Laden und Ausführen auf einem Computer ein in diesem Dokument beschriebenes Verfahren ganz oder teilweise ausführt.

Im Folgenden werden weitere Ausführungsbeispiele der Erfindung anhand einer Figur näher erläutert.

Die Figur zeigt ein Notrufsystem für ein Kraftfahrzeug.

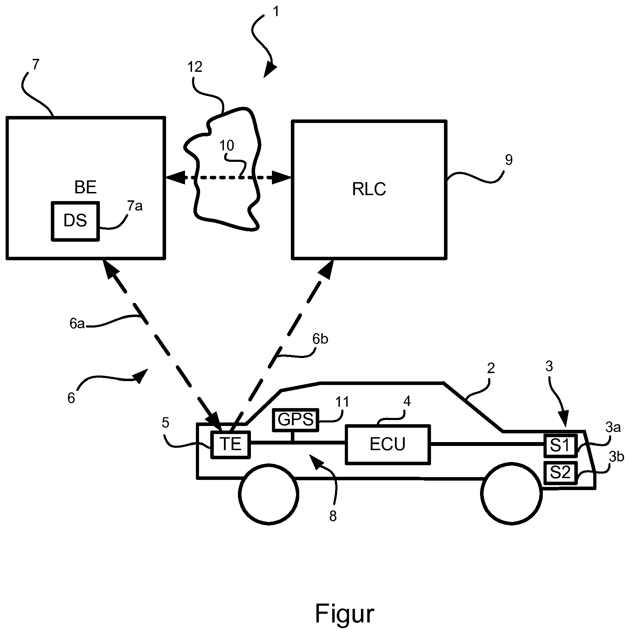

In dem in Figur 1 dargestellten Notrufsystem 1 ist in einem Kraftfahrzeug 2 eine Telematik-Einheit (TE) 5 vorgesehen, die fahrzeugintern datentechnisch über ein Datenbus-System 8 mit einer elektronischen Steuereinrichtung (Electronic Control Unit, ECU) 4 verbunden ist und die über eine Mobilfunkverbindung 6 mit mindestens einem fahrzeugexternen Computer verbindbar ist, zum Beispiel mit einem Rettungsleitstellen-Computer (RLC) 9 und/oder mit einem Backend-Computer (BE) 7, der unabhängig vom Rettungsleitstellen-Computer 9 beispielsweise von einem Dienstleister oder vom Hersteller des Kraftfahrzeugs 2 betrieben wird. Der Betrieb kann zum Beispiel in einem Call Center erfolgen. Die Mobilfunkverbindung 6 kann insbesondere über entsprechende Mobilfunk-Komponenten erfolgen, die einem Mobilfunkstandard entsprechen, beispielsweise zumindest einem der GSM-Standards GSM2, GSM3, GSM4 und GSM5. Die Mobilfunkverbindung 6 kann auch ganz oder teilweise mittels eines anderen Funkstandards wie z.B. WLAN hergestellt werden. Die Verbindungen 6a und 6b können jeweils als Daten- und/oder Sprachverbindung ausgebildet sein.

Die Mobilfunk-Komponenten können in Verbindung mit bzw. innerhalb der Telematik-Einheit 5 ansich bekannte, übliche Komponenten umfassen, beispielsweise eine SIM-Karte (Subscriber Identity Module), eine Sende- und/oder Empfangsantenne, einen Mobilfunkchip, in dem jeweilige Steuerungssoftware für den Mobilfunkstandard gespeichert ist, usw. umfassen. Außerhalb des Fahrzeugs können die Mobilfunk-Komponenten beispielsweise eine Funk-Basisstation eines Mobiltelefon-Funknetzwerks umfassen und/oder elektronische Sende- und/oder Empfangskomponenten für WLAN-Signale. Mittels der entsprechenden Mobilfunk-Infrastruktur kann von der Telematik-Einheit 5 des Kraftfahrzeugs 2 eine Datenverbindung 6a zu dem Backend-Computer 7 und/oder eine Datenverbindung 6b zu dem Rettungsleitstellen-Computer 9 ganz oder teilweise kabelgebunden hergestellt sein. Auch zwischen dem Backend-Computer 7 und dem Rettungsleitstellen-Computer 9 kann eine ganz oder teilweise kabelgebundene bzw. eine ganz oder teilweise drahtlose Datenverbindung hergestellt werden.

Das Datenbussystem 8 kann beispielsweise einen Controller Area Network Bus (CAN-Bus), einen Media Oriented Systems Transport (MOST-Bus) und/oder einen Ethernet-Bus umfassen. Über das Datenbussystem 8 können auch zwischen der Steuereinrichtung und im Fahrzeug fest verbauten Sensoren 3, 3a, 3b, 11 Daten übertragen werden. Die Sensoren 3 umfassen zumindest zwei unfallrelevante Sensoren (Crash-Sensoren) 3a (S1) und 3b (S2), mit denen jeweils Ereignisse detektierbar sind, die auf einen Unfall hindeuten. Ein Crash-Sensor kann insbesondere auch dazu verwendet werden, ein Unfall-Sicherheitssystem zu aktivieren wie z.B. einen Gurtstraffer, einen Airbag oder eine Fußgängerschutz-Einrichtung des Kraftfahrzeugs 2. Weiterhin ist ein GPS-Sensor 11 vorgesehen, mit dem die Fahrzeugposition bestimmbar ist. Es ist auch möglich, dass in dem Kraftfahrzeug 1 ein Sensor vorgesehen bzw. verbaut ist, der die Aufgaben der dargestellten Sensoren 3a (S1) und 3b (S2) vereint.

Die Telematik-Einheit 5 umfasst erste Komponenten, insbesondere per Software gesteuerte und/oder Software umfassende Komponenten, die eingerichtet sind zur Herstellung der Datenverbindung 6b zwischen dem Kraftfahrzeug 2 und dem Computer 9 der insbesondere von einer öffentlichen Einrichtung betriebenen Rettungsleitstelle (engl. Call Centre for Emergency Calls, auch Public Safety Answering Point, PSAP, genannt). In diesen Komponenten ist beispielsweise die Euronotrufnummer 112 gespeichert. Diese ersten Komponenten können insbesondere so ausgebildet sein, dass sie im Rahmen des eCall und/oder von ERA GLONASS gesetzlich und/oder per Standard bzw. Norm gestellte Vorgaben erfüllen.

Die Telematik-Einheit 5 umfasst zweite Komponenten, insbesondere per Software gesteuerte und/oder Software umfassende Komponenten, die eingerichtet sind zur Herstellung der Datenverbindung 6A zwischen dem Kraftfahrzeug 2 und dem Backend-Computer 7. in diesen Komponenten ist beispielsweise eine Verbindungsinformation zur Herstellung einer Daten-und/oder Sprachverbindung zwischen dem Kraftfahrzeug 2 und dem Backend-Computer 7 gespeichert. Die Verbindungsinformation kann eine Telefonnummer umfassen. Sie kann auch eine Computer-Netzwerkadresse umfassen.

In der Telematik-Einheit 5 ist weiterhin zumindest eine Komponente (z.B. Software und/oder Datenspeicher) vorgesehen, in der eine Kontaktinformation zur Herstellung einer Daten- und/oder Sprachverbindung zwischen dem Rettungsleitstellen-Computer 9 und dem Backend-Computer 7 gespeichert ist. Die Kontaktinformation kann insbesondere eine Telefonnummer und/oder eine Computer-Netzwerkadresse umfassen. Die Telematik-Einheit 5 umfasst insbesondere eine Komponente, mit der die Kontaktinformation im Rahmen einer Datenübertragung von der Telematik-Einheit 5 zu dem Rettungsleitstellen-Computer 9 übertragen wird. Die Übertragung kann beispielsweise im Rahmen von eCall durch mindestens ein dort spezifiziertes, fahrzeugherstellerspezifisches Datenfeld erfolgen.

Nachfolgend wird ein möglicher Anwendungsfall für die mit der Telematik-Einheit 5 bereit gestellte Notrufeinrichtung beschrieben, bei dem ein eCall ausgelöst wird. Wenn das Kraftfahrzeug 2 verunfallt und/oder von der Steuerung 4 (oder einer anderen Fahrzeugsteuerung) an die Telematik-Einheit 5 ein entsprechendes Notrufsignal gesandt wird, dann werden in dem Kraftfahrzeug 2 mittels der Fahrzeugsensoren 3, 3a, 3b, 11, der Fahrzeug-Steuerung 4 und/oder der Telematik-Einheit 5 Daten generiert, verarbeitet und/oder erfasst. Die Daten können auch bereits vor dem Unfallereignis und/oder nach dem Unfallereignis erzeugte, erfasste und/oder verarbeitete Daten umfassen.

Ein erster Teil der Daten, nämlich zumindest die für einen eCall gesetzlich vorgesehenen Mindest-Daten, wird im Rahmen des eCalls an den Computer 9 der Rettungsleitstelle übertragen. Die eCall Mindest-Daten umfassen beispielsweise die im Fahrzeug gespeicherte Fahrgestellnummer (Vehicle Identification Number, VIN), den z.B. mittels eines GPS-Sensors 11 erfassten aktuellen Aufenthaltsort des Fahrzeugs (Unfallort, GPS-Koordinaten), die z.B. per GPS erfasste Fahrtrichtung usw.

Ein zweiter Teil der im Fahrzeug generierten, verarbeiteten und/oder erfassten Daten, so genannte herstellerspezifische Unfalldaten, wird von der Telematik-Einheit 5 nicht an den Computer 9 übertragen, aber an den Backend-Computer 7 übertragen und dort in einem Datenspeicher (DS) 7a beispielsweise temporär und/oder dauerhaft gespeichert. Beispielsweise können diese Daten mittels der Unfallsensoren 3a, 3b des Kraftfahrzeugs 2 erzeugte, erfasste und/oder verarbeitete Daten umfassen, die funktionell mit mindestens einem Unfallsicherheitssystem wie einem Rückhaltesystem, einem Airbag und/oder einem Fußgängerschutz-System im Zusammenhang stehen. Sie können auch weitere, beispielsweise auf die Anzahl der Fahrzeuginsassen bezogene und mittels anderer Sensoren wie z.B. einer Fahrzeug-Innenraumkamera erfasste Daten umfassen. Die von der Telematik-Einheit 5 an den Backend-Computer 7 übertragenen Daten können dort weiter verarbeitet bzw. aufbereitet und die so verarbeiteten Daten ebenfalls gespeichert werden.

Mittels der oben erwähnten, ersten Komponenten der Telematik-Einheit 5 wird über die Datenverbindung 6b ein eCall-Notruf an den Rettungsleitstellen-Computer 9 abgesetzt, wenn zumindest einer der beiden Sensoren 3a, 3b ein Unfallsignal erzeugt. Der eCall-Notruf ist eine Datenverbindung, bei der die eCall Mindest-Daten vom Kraftfahrzeug 2 an die Rettungsleitstelle übertragen werden. Weiterhin wird als Kontaktinformation für die Rettungsleitstelle an deren Computer 9 eine Netzwerk-Adresse, beispielsweise eine URL, des Backend-Computers 7 übertragen, unter der die Rettungsleitstelle über die Datenverbindung 10 die herstellerspezifischen Unfalldaten vom Backend-Computer 7 abrufen kann.

Die Datenverbindung 10 zum Übertragen der URL-Daten kann dabei über eine Computer-Netzwerkverbindung 12, insbesondere über das Internet hergestellt werden. Die URL wird typischerweise im Kraftfahrzeug 2 erzeugt. Die URL könnte auch im Backend-Computer 7 erzeugt, über die Datenverbindung 6a an das Kraftfahrzeug 2 als Hyperlink gemeldet werden und von dort über die Datenverbindung 10 an die Rettungsleitstelle gesandt werden. Die URL enthält eine das verunfallte Fahrzeug eindeutig identifizierende Kennung (engl. Identifier), beispielsweise die Fahrgestellnummer (engl. Vehicle Identification Number, VIN) oder einen das Fahrzeug eindeutig identifizierenden Teil daraus. Weiterhin kann die URL eine eindeutige Kennung enthalten, die das aktuelle Ereignis (z.B. Notruf bzw. Unfall) identifiziert. Eine solche URL kann beispielsweise folgende entsprechende Struktur aufweisen: https://psap.bmwgroup.net/?VIN=AB12345&Event=abcdefgh123456789 . Dabei bezeichnet AB12345 mindestens einen Teil der Fahrgestellnummer und abcdefgh123456789 eine Kennung zur Identifizierung des Unfallereignisses.

Die URL wird vom Kraftfahrzeug 2 an die Rettungsleitstelle übertragen. Von der Rettungsleitstelle können sodann mittels der übertragenen Netzwerkadresse bzw. URL des Backend-Computers 7 und die Datenverbindung 10 die herstellerspezifischen Unfalldaten des aktuellen Unfalls des Kraftfahrzeugs 2 von dem Backend-Computer 7 abgerufen werden. Die abgerufenen Daten können unter anderem Sensor-Daten und/oder verarbeitete bzw. aufbereitete Daten umfassen. Die Daten werden dabei auf den Rettungsleitstellen-Computer 9 übertragen. Der Zugang kann insbesondere mittels eines auf dem Computer 9 installierten, handelsüblichen Internet-Browsers wie z.B. dem Internet Explorer erfolgen. Er kann auch mittels einer eigens dafür eingerichteten Schnittstelle erfolgen. Die übertragenen Daten können in einer auf dem Rettungsleitstellen-Computer 9 installierten Grafik-Anwendung grafisch aufbereitet und angezeigt werden. Über die Datenverbindung 10 bzw. das Netzwerk 12 kann auch eine Sprachverbindung zwischen der Rettungsleitstelle und dem von dieser organisatorisch und/oder örtlich unabhängigen Call Center hergestellt, werden, in dem sich der Backend-Computer 7 befindet.

Insbesondere im Backend-Computer 7 kann ein Computerprogramm ablaufen, das aus verfügbaren, insbesondere von Daten aus Fahrzeugsensoren abgeleiteten, fahrzeug- bzw. herstellerspezifischen Unfall-Informationen mittels eines geeigneten, vorgegebenen Algorithmus eine Unfallschwere berechnet und daraus Ausgabedaten bildet, mittels denen der Rettungsleitstelle visuell leicht verständlich die Unfallart, die Unfallschwere usw. beispielsweise mittels Bildern, Symbolen usw. dargestellt werden kann.

Auf Basis der gesammelten Daten, d.h. der eCall-Mindestdaten, der herstellerspezifischen Unfalldaten und/oder daraus gebildeter Ausgabedaten, kann dann die Rettungsleitstelle beurteilen, welche Hilfsmittel benötigt werden und basierend darauf entsprechende Einsatzkräfte alarmieren und gezielt die geeigneten, der jeweiligen Unfallart angemessenen Hilfsmittel anfordern, beispielsweise einen Rettungswagen, eine Rettungsschere und/oder einen Abschleppwagen mit Kran. Damit können diese Hilfsmittel für die Unfallopfer und für das verunfallte Kraftfahrzeug 2 und ggf. weiteren Fahrzeugen von den Einsatzkräften wie z.B. Rettungskräften, Feuerwehr und/oder Polizei zeitnah bereitgestellt werden.

Ein einen Notruf auslösendes Notrufsignal kann insbesondere erzeugt werden, nachdem einer der Crash-Sensoren 3a, 3b einen Unfall signalisiert. Es kann aber auch mittels eines im Kraftfahrzeug 2 vorgesehenen elektrischen, insbesondere elektromechanischen Notrufschalters erzeugt werden, der manuell vom Fahrzeugführer bedienbar ist.

In dem Kraftfahrzeug 2 können weitere, in der Figur nicht gezeigte Komponenten vorgesehen sein, die im Zusammenhang mit der beschriebenen Erfindung nutzbar sind. Beispielsweise kann im Fahrgastraum eine Freisprecheinrichtung vorgesehen sein, über die mit der Rettungsleitstelle und/oder dem vom Fahrzeughersteller betriebenen Call Center eine Sprachverbindung zum Fahrzeugführer und/oder zu Passagieren des Fahrzeugs hergestellt werden kann.

Über die Telematik-Einheit 5 können eine Vielzahl von Betriebs-Daten des Kraftfahrzeugs 2 an den Backend-Computer 7 und/oder den Rettungsleitstellen-Computer 9 übertragen werden, die vor, während und/oder nach dem Unfallereignis im Fahrzeug erfasst und/oder mittels Datenverarbeitung erzeugt werden.

Die beschriebenen Geräte und Systemkomponenten werden insbesondere mit Computerprogrammen gesteuert und können dazu weitere, an sich bekannte Elemente von Computern und digitalen Steuerungseinrichtungen wie einen Mikroprozessor, flüchtige und nicht flüchtige Speicher, Schnittstellen usw. aufweisen. Die Erfindung kann deshalb auch ganz oder teilweise in Form eines Computerprogrammprodukts realisiert werden, das beim Laden und Ausführen auf einem Computer einen erfindungsgemäßen Ablauf ganz oder teilweise bewirkt. Es kann beispielsweise in Form eines Datenträgers wie einer CD/DVD bereit gestellt werden oder auch in Form einer oder mehrerer Dateien auf einem Server, von dem das Computerprogramm herunter ladbar ist.

## Patentansprüche

1. Verfahren zum Bereitstellen von Hilfsmitteln nach einem Fahrzeugunfall, bei dem mittels einer Notrufeinrichtung des Fahrzeugs (2) nach dem Unfall automatisch eine Daten- und/oder Sprechfunkverbindung (6a, 6b) zwischen dem Fahrzeug (2) und einer Rettungsleitstelle hergestellt wird, wobei mittels mindestens eines ersten Sensors (3, 3a, 3b, 11) im Fahrzeug (2) ermittelte erste Sensor-Daten an die Rettungsleitstelle übertragen werden,
wobei
- die von dem ersten Sensor (3, 3a, 3b, 11) erfassten ersten Sensor-Daten und von mindestens einem zweiten, im Fahrzeug (2) vorgesehenen Sensor (3, 3a, 3b, 11) erfasste zweite Sensor-Daten automatisch an einen von der Rettungsleitstelle unabhängigen Datenspeicher (7a) übertragen und dort gespeichert werden,
- über die Daten- und/oder Sprechfunkverbindung (6a, 6b) eine dem Datenspeicher (7a) zugeordnete Kontaktinformation vom Fahrzeug (2) zu der Rettungsleitstelle übertragen wird,
**dadurch gekennzeichnet, dass**
- der Datenspeicher (7a) in einem Datenverarbeitungszentrum vorgesehen ist, in dem weiterhin ein Backend Computer (7) vorgesehen ist, in dem zumindest von den gespeicherten zweiten Sensor-Daten abgeleitete Daten gebildet werden, und
- die Rettungsleitstelle die abgeleiteten Daten unter Verwendung der Kontaktinformation abruft, wobei die abgerufenen Daten zur Auswahl von der Unfallart angepassten Hilfsmitteln geeignet sind.

2. Verfahren nach Anspruch 1, **dadurch gekennzeichnet, dass** im Backend Computer (7) mittels verfügbarer Daten aus Fahrzeugsensoren (3, 3a, 3b, 11) herstellerspezifische Unfall-Informationen abgeleitet werden, aus diesen mittels eines vorgegebenen Algorithmus eine Unfallschwere berechnet wird und daraus Ausgabedaten gebildet werden, mittels denen der Rettungsleitstelle die Unfallart und die Unfallschwere visuell leicht verständlich dargestellt werden kann.

3. Verfahren nach einem der Ansprüche 1 oder 2, **dadurch gekennzeichnet, dass** der Backend Computer (7) mit einer Vielzahl von Fahrzeugen des Fahrzeugherstellers regelmäßig Daten austauscht.

4. Verfahren nach Anspruch 3, **dadurch gekennzeichnet, dass** der regelmäßige Austausch vor, während und/oder nach dem Unfallereignis erfasste und/oder mittels Datenverarbeitung erzeugte Daten umfasst.

5. Verfahren nach einem der vorhergehenden Ansprüche, **dadurch gekennzeichnet, dass** die Rettungsleitstelle mittels der Kontaktinformationen weiterhin Sensor-Daten von dem Backend Computer (7) abruft.

6. Verfahren nach einem der vorhergehenden Ansprüche, **dadurch gekennzeichnet, dass** der unabhängige Datenspeicher (7a) in einem adressenbasierten Computernetzwerk (12) vorgesehen ist und dass die vom Fahrzeug (2) zur Rettungsleitstelle übertragene Kontaktinformation eine dem Datenspeicher (7a) zugeordnete Netzwerk-Adresse umfasst.

7. Verfahren nach einem der vorhergehenden Ansprüche, **dadurch gekennzeichnet, dass** die zweiten Sensor-Daten eine Fahrzeug-Kontaktinformation umfassen und dass von der Rettungsleitstelle mittels der Fahrzeug-Kontaktinformation eine weitere Daten- und/oder Sprechfunkverbindung (6a, 6b) zu dem Fahrzeug (2) hergestellt wird.

8. Verfahren nach einem der vorhergehenden Ansprüche, **dadurch gekennzeichnet, dass** die in dem unabhängigen Datenspeicher (7a) gespeicherten, zweiten Sensor-Daten derart gesichert sind, dass sie von der Rettungsleitstelle nicht verändert, sondern nur abgerufen werden können.

9. Notrufsystem umfassend eine Notrufeinrichtung für ein Fahrzeug, einen Computer (9) einer Rettungsleitstelle und einen Datenspeicher (7a), wobei der Computer (9) der Rettungsleitstelle eingerichtet ist, in dem unabhängigen Datenspeicher (7a) gespeicherte, zweite Sensor-Daten unter Verwendung von Kontaktinformation abzurufen und der Datenspeicher (7a) eingerichtet ist, die zweiten Sensor-Daten zu speichern und auf Abruf auszugeben, wobei die Notrufeinrichtung eingerichtet ist, um nach einem Unfall des Fahrzeugs (2) automatisch eine Daten- und/oder Sprechfunkverbindung (6a, 6b) zwischen dem Fahrzeug (2) und der Rettungsleitstelle herzustellen, wobei mittels mindestens eines ersten Sensors (3, 3a, 3b, 11) im Fahrzeug (2) ermittelte erste Sensor-Daten an die Rettungsleitstelle übertragen werden, **dadurch gekennzeichnet, dass** das Notrufsystem derart ausgestaltet ist, dass es
- die von dem ersten Sensor (3, 3a, 3b, 11) erfassten Sensor-Daten und von mindestens dem zweiten, im Fahrzeug (2) vorgesehenen Sensor (3, 3a, 3b, 11) erfassten, zweiten Sensor-Daten automatisch an den von der Rettungsleitstelle unabhängigen Datenspeicher (7a) sendet, der in einem Datenverarbeitungszentrum vorgesehen ist, in dem weiterhin ein Backend Computer (7) vorgesehen ist, in dem zumindest von den gespeicherten zweiten Sensor-Daten abgeleitete Daten gebildet werden, und dass
- über die Daten- und/oder Sprechfunkverbindung (6a, 6b) eine dem Datenspeicher (7a) zugeordnete Kontaktinformation vom Fahrzeug (2) zu der Rettungsleitstelle gesandt wird, so dass die Rettungsleitstelle die abgeleiteten Daten unter Verwendung der Kontaktinformation abrufen kann, wobei die abgerufenen Daten geeignet sind zur Auswahl von der Unfallart angepassten Hilfsmitteln.

10. Notrufsystem nach Anspruch 9, **dadurch gekennzeichnet, dass** eine erste Steuerungseinrichtung vorgesehen ist, die zur Ausgabe der ersten Sensor-Daten und der Kontaktinformation an die Rettungsleitstelle eingerichtet ist und eine zweite, von der ersten Steuerungseinrichtung funktionell unabhängige Steuerungseinrichtung, die eingerichtet ist um zumindest die zweiten Sensor-Daten an den Datenspeicher (7a) zu senden.

## Claims

1. A method for providing aid after a vehicle accident, in which method, after the accident, a wireless data and/or voice connection (6a, 6b) between the vehicle (2) and a rescue centre is established by means of an emergency call device of the vehicle (2), wherein first sensor data, ascertained by means of at least one first sensor (3, 3a, 3b, 11) in the vehicle (2) are transmitted to the rescue centre,
wherein
- the first sensor data detected by the first sensor (3, 3a, 3b, 11) and second sensor data detected by at least one second sensor (3, 3a, 3b, 11) provided in the vehicle (2) are transmitted automatically to a data storage unit (7a) independent of the rescue centre and are stored there,
- contact information assigned to the data storage unit (7a) is transmitted from the vehicle (2) to the rescue centre via the wireless data and/or voice connection (6a, 6b),
**characterised in that**
- the data storage unit (7a) is provided in a data processing centre in which there is also provided a backend computer (7), in which data derived at least from the stored second sensor data are formed, and
- the rescue centre retrieves the derived data with use of the contact information, wherein the retrieved data are suitable for selecting aids appropriate to the type of accident.

2. A method according to claim 1, **characterised in that**, in the backend computer (7), manufacturer-specific accident information is derived by means of available data from vehicle sensors (3, 3a, 3b, 11), the severity of the accident is calculated on the basis of this information by means of a predefined algorithm, a nd output data are formed on this basis, by means of which the type of accident and the severity of the accident can be displayed to the rescue centre visually in an easily comprehensible form.

3. A method according to either one of claims 1 or 2, **characterised in that** the backend computer (7) regularly exchanges data with multiple vehicles of the vehicle manufacturer.

4. A method according to claim 3, **characterised in that** the regular exchange comprises data detected and/or produced by means of data processing before, during and/or after the accident event.

5. A method according to any one of the preceding claims, **characterised in that** the rescue centre furthermore retrieves sensor data from the backend computer (7) by means of the contact information.

6. A method according to any one of the preceding claims, **characterised in that** the independent data storage unit (7a) is provided in an address-based computer network (12), and **in that** the contact information transmitted from the vehicle (2) to the rescue centre comprises a network address assigned to the data storage unit (7a).

7. A method according to any one of the preceding claims, **characterised in that** the second sensor data comprise vehicle contact information, and **in that** a further wireless and/or voice connection (6a, 6b) is established from the rescue centre to the vehicle (2) by means of the vehicle contact information.

8. A method according to any one of the preceding claims, **characterised in that** the second sensor data stored in the independent data storage unit (7a) are secured in such a way that they cannot be altered by the rescue centre, butcan only be retrieved thereby.

9. An emergency call system comprising an emergency call device for a vehicle, a computer (9) of a rescue centre, and a data storage unit (7a), wherein the computer (9) of the rescue centre is configured to retrieve second sensor data stored in the independent data storage unit (7a) using contact information, and the data storage unit (7a) is configured to store the second sensor data and to output it upon request, wherein the emergency call device is configured to automatically establish a wireless data and/or voice connection (6a, 6b) between the vehicle (2) and the rescue centre following an accident involving the vehicle (2), wherein ascertained first sensor data are transmitted to the rescue centre by means of at least one first sensor (3, 3a, 3b, 11) in the vehicle (2),
**characterised in that** the emergency call system is configured in such a way that it
- automatically sends the sensor data detected by the first sensor (3, 3a, 3b, 11) and second sensor data detected by at least the second sensor (3, 3a, 3b, 11) provided in the vehicle (2) to the data storage unit (7a) independent of the rescue centre, which data storage unit is provided in a data processing centre, in which a backend computer (7) is furthermore provided, in which data derived at least from the stored second sensor data are formed, and **in that**
- contact information assigned to the data storage unit (7a) is sent from the vehicle (2) to the rescue centre via the wireless data and/or voice connection (6a, 6b), such that the rescue centre can retrieve the derived data with use of the contact information, wherein the retrieved data are suitable for selecting aids appropriate to the type of accident.

10. An emergency call system according to claim 9, **characterised in that** a first control unit is provided and is configured to output the first sensor data and the contact information to the rescue centre, and a second control unit, which is functionally independent of the first control unit, is provided and is configured to send at least the second sensor data to the data storage unit (7a).

## Revendications

1. Procédé permettant de fournir des moyens d'assistance après un accident d'un véhicule selon lequel, au moyen d'un dispositif d'appel d'urgence du véhicule (2), on établit automatiquement après l'accident une communication de données et/ou une communication radio (6a, 6b) entre le véhicule (2) un poste de commandement des opérations de secours, des premières données de capteur obtenues dans le véhicule (2) au moyen d'au moins un premier capteur (3, 3a, 3b, 11) étant transmises au poste de commandement des opérations de secours,
procédé selon lequel :
- les premières données de capteur détectées par le premier capteur (3, 3a, 3b, 11) et des secondes données de capteur détectées par au moins un second capteur (3, 3a, 3b, 11) situé dans le véhicule (2) sont transmises automatiquement à une mémoire de données (7a) indépendante du poste de commandement des opérations de secours et y sont stockées, et
- par l'intermédiaire de la communication de données et/ou de la communication radio (6a, 6b), une information de contact associée à la mémoire de données (7a) est transmise du véhicule (2) au poste de commandement des opérations de secours,
**caractérisé en ce que**
- la mémoire de données (7a) est située dans un centre de traitement de données, dans lequel est en outre situé un ordinateur principal (7) dans lequel sont formées des données déduites d'au moins des secondes données de capteur stokées, et
- le poste de commandement des opérations de secours récupère les données déduites en utilisant l'information de contact, les données récupérées étant susceptibles de permettre de choisir les moyens d'assistance adaptés à l'accident.

2. Procédé conforme à la revendication 1,
**caractérisé en ce que**
dans l'ordinateur principal (7) sont déduites, au moyen de données disponibles provenant de capteurs du véhicule (3, 3a, 3b, 11) des informations d'accident spécifiques au fabricant à partir desquelles au moyen d'un algorithme prédéfini on calcule la gravité de l'accident et à partir de celle-ci on forme des données de sortie au moyen desquelles le poste de commandement des opérations de secours peut représenter de façon facilement compréhensible visuellement le type d'accident et la gravité de celui-ci.

3. Procédé conforme à la revendication 1 ou 2,
**caractérisé en ce que**
l'ordinateur principal (7) échange régulièrement des données avec un ensemble de véhicules du fabricant du véhicule.

4. Procédé conforme à la revendication 3,
**caractérisé en ce que**
l'échange régulier comprend des données détectées, avant, pendant et/ou après l'événement d'accident et/ou produites par traitement de données.

5. Procédé conforme à l'une des revendications précédentes,
**caractérisé en ce que**
le poste de commandement des opérations de secours récupère en outre des données de capteur de l'ordinateur principal (7) au moyen des informations de contact.

6. Procédé conforme à l'une des revendications précédentes,
**caractérisé en ce que**
la mémoire de données indépendante (7a) est prévue dans un réseau d'ordinateur (12) basé sur des adresses, et, l'information de contact transmise par le véhicule (2) au poste de commandement des opérations de secours comprend une adresse de réseau associée à la mémoire de données (7a).

7. Procédé conforme à l'une des revendications précédentes,
**caractérisé en ce que**
les secondes données de capteur comprennent une information de contact du véhicule, et à partir du poste de commandement des opérations de secours, et au moyen de l'information de contact du véhicule est obtenue une autre communication de données et/ou communication radio (6a, 6b) vers le véhicule (2).

8. Procédé conforme à l'une des revendications précédentes,
**caractérisé en ce que**
les secondes données de capteur stockées dans la mémoire de données indépendante (7a) sont sécurisées de sorte qu'elles ne puissent être modifiées par le poste de commandement des opérations de secours, mais ne puissent qu'être récupérées.

9. Système d'appel d'urgence comprenant un dispositif d'appel d'urgence destiné à un véhicule, un ordinateur (9), d'un poste de commandement d'opérations de secours et une mémoire de données (7a), l'ordinateur (9) du poste de commandement d'opérations de secours étant susceptible de récupérer des secondes données de capteur stockées dans la mémoire de données indépendante (7a) en utilisant une information de contact, et la mémoire de données (7a) étant susceptible de stocker les secondes données de capteur, et de les délivrer en cas d'appel, le dispositif d'appel d'urgence étant susceptible d'établir automatiquement, après un accident du véhicule (2), une communication de données et/ou une communication radio (6a, 6b) entre le véhicule (2) et le poste de commandement d'opérations de secours des premières données de capteur saisies dans le véhicule (2), au moyen d'au moins un premier capteur (3, 3a, 3b, 11), étant transmise au poste de commandement d'opérations de secours,
**caractérisé en ce que**
le système d'appel d'urgence est conçu de sorte qu'il puisse :
- transmettre automatiquement les données de capteur détectées par le premier capteur (3, 3a, 3b, 11) et des secondes données de capteur détectées au moins par le second capteur (3, 3a, 3b, 11) situé dans le véhicule (2), à la mémoire de données (7a) indépendante du poste de commandement des opérations de secours qui est située dans un centre de traitement de données dans lequel est en outre prévu un ordinateur principal (7) dans lequel sont formées des données déduites au moins des données du second capteur de données enregistrées, et
- par l'intermédiaire de la communication de données et/ou de la communication radio (6a, 6b) une information de contact associée à la mémoire de données (7a) est transmise du véhicule (2) au poste de commandement des opérations de secours de sorte que le poste de commandement des opérations de secours puisse récupérer les données déduites en utilisant l'information de contact, les données récupérées étant adaptées pour sélectionner des moyens de secours adaptés au type d'accident.

10. Système d'appel d'urgence conforme à la revendication 9,
**caractérisé en ce qu'**
il est prévu un premier dispositif de commande conçu pour permettre de délivrer les premières données de capteur et l'information de contact au poste de commandement des opérations de secours, et un second dispositif de commande fonctionnellement indépendant du premier dispositif de commande qui est conçu pour transmettre au moins les secondes données de capteur à la seconde mémoire de données (7a).
